(19) **Europäisches Patentamt European Patent Office Office européen des brevets**

(11) **EP 2 212 722 B1**

(12) **FASCICULE DE BREVET EUROPEEN**

(45) Date de publication et mention
de la délivrance du brevet:
**07.09.2011 Bulletin 2011/36**

(51) Int Cl.:
***G01V 11/00*** *(2006.01)*

(21) Numéro de dépôt: **08872155.0**

(22) Date de dépôt: **06.11.2008**

(86) Numéro de dépôt international:
**PCT/FR2008/001567**

(87) Numéro de publication internationale:
**WO 2009/098366 (13.08.2009 Gazette 2009/33)**

(54) **METHODE DE MODELISATION D'UN MILIEU GÉOLOGIQUE POREUX TRAVERSÉ PAR UN RÉSEAU DE FRACTURES**

VERFAHREN ZUR MODELLIERUNG EINER PORÖSEN GEOLOGISCHEN UMGEBUNG MIT DURCH DIESE VERLAUFENDEM FRAKTURENNETZ

METHOD OF MODELLING A POROUS GEOLOGICAL ENVIRONMENT THROUGH WHICH A NETWORK OF FRACTURES RUNS

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **19.11.2007 FR 0708154**

(43) Date de publication de la demande:
**04.08.2010 Bulletin 2010/31**

(73) Titulaire: **IFP Energies nouvelles
92852 Rueil-Malmaison Cedex (FR)**

(72) Inventeurs:
• **BOURBIAUX, Bernard
F-92500 Rueil-Malmaison (FR)**
• **DELAPLACE, Philippe
F-92500 Rueil-Malmaison (FR)**
• **FOURNO, André
F-92500 Rueil-Malmaison (FR)**

(56) Documents cités:
**EP-A- 1 158 312 FR-A- 2 757 957**

• **WARREN J E: "The Behavior of Naturally
Fractured Reservoirs" 19630901, no. 426, 1
septembre 1963 (1963-09-01), XP002039628 cité
dans la demande**
• **FAMY C ET AL: "Accurate modeling of matrixfracture transfers in dual-porosity models:
Optimal subgridding of matrix blocks" SPE
RESERVOIR SIMUL. SYMP. PROC.; SPE
RESERVOIR SIMULATION SYMPOSIUM,
PROCEEDINGS; 2005 SPE RESERVOIR
SIMULATION SYMPOSIUM, PROCEEDINGS
2005, 2005, pages 257-267, XP002487219**

## Description

La présente invention concerne le domaine de l'optimisation de l'exploitation de gisements souterrains, tels que des gisements d'hydrocarbures, notamment lorsque ceux-ci comportent un réseau de fractures.

La méthode selon l'invention, convient notamment pour l'étude des propriétés hydrauliques de terrains fracturés, et notamment pour étudier les déplacements d'hydrocarbures dans des gisements souterrains.

En particulier, l'invention concerne une méthode destinée à modéliser le réseau de fractures d'un milieu géologique hétérogène, de façon à prédire les écoulements de fluides susceptibles de se produire à travers ce milieu. On peut alors simuler une production d'hydrocarbures suivant divers scénarios de production.

L'industrie pétrolière, et plus précisément l'exploration et l'exploitation de gisements pétroliers, nécessitent d'acquérir une connaissance aussi parfaite que possible de la géologie souterraine pour fournir de façon efficace une évaluation des réserves, une modélisation de la production, ou la gestion de l'exploitation. En effet, la détermination de l'emplacement d'un puits de production ou d'un puits d'injection, la constitution de la boue de forage, les caractéristiques de complétion, les paramètres nécessaires à la récupération optimale des hydrocarbures (tels que la pression d'injection, le débit de production,...) nécessitent de bien connaître le gisement. Connaître le gisement signifie notamment connaître les propriétés pétrophysiques du sous-sol en tout point de l'espace.

Pour ce faire, depuis longtemps, l'industrie pétrolière allie les mesures sur champ (in, situ) aux modélisations expérimentales (réalisées au laboratoire) et/ou numériques (réalisées au moyen de logiciels). Les modélisations des gisements pétroliers constituent donc une étape technique indispensable à toute exploration ou exploitation de gisement. Ces modélisations ont pour but de fournir une description du gisement.

## État de la technique

Les réservoirs fissurés constituent un type extrême de réservoirs hétérogènes comportant deux milieux contrastés, un milieu matriciel contenant la plus grande part de l'huile en place et présentant une faible perméabilité, et un milieu fissuré représentant moins de 1 % de l'huile en place et hautement conducteur. Le milieu fissuré lui-même peut être complexe, avec différents ensembles de fissures caractérisés par leur densité, longueur, orientation, inclinaison et ouverture respectives.

Les ingénieurs en charge de l'exploitation de réservoirs fracturés, ont besoin de parfaitement connaître le rôle des fractures. On appelle "*fracture",* une discontinuité plane, de très faible épaisseur par rapport à son extension, et qui représente un plan de rupture d'une roche du gisement.

D'une part, la connaissance de la distribution et du comportement de ces fractures permet d'optimiser la localisation et l'espacement entre les puits que l'on compte forer au travers du gisement pétrolifère.

D'autre part, la géométrie du réseau de fractures conditionne le déplacement des fluides tant à l'échelle du réservoir qu'à l'échelle locale où elle détermine des blocs matriciels élémentaires dans lesquels l'huile est piégée. Connaître la distribution des fractures, est donc très utile, aussi, à un stade ultérieur, pour l'ingénieur de réservoir qui cherche à calibrer les modèles qu'il construit pour simuler les gisements afin d'en reproduire ou prédire les courbes de production passées ou futures.

A ces fins, les spécialistes de géosciences disposent d'images tridimensionnelles des gisements, permettant de localiser un grand nombre de fractures.

Cependant, pour prédire les écoulements de fluides susceptibles de se produire au travers du gisement, et ainsi simuler la production d'hydrocarbures suivant divers scénarios de production, le spécialiste utilise un logiciel, appelé « simulateur d'écoulement », qui lui permet de réaliser des simulations de réservoir, c'est-à-dire des simulations des écoulements au sein du gisement. Or, ces simulateurs d'écoulement sont basés sur des schémas numériques qui ne permettent pas l'utilisation directe de ce type d'images tridimensionnelles. La représentation d'un réseau de fissures dans des simulateurs d'écoulement a été longtemps considérée comme irréaliste car la configuration du réseau est en partie inconnue, et à cause des limitations numériques liées à la juxtaposition de nombreuses cellules présentant des dimensions et des propriétés extrêmement contrastées.

C'est pourquoi la modélisation simplifiée mais réaliste de tels milieux, présente un grand intérêt pour les spécialistes des gisements.

Pour ce faire, on connaît une approche, appelée "approche double porosité", proposée par exemple par Warren J.E. et al. dans "The Behavior of Naturally Fractured Reservoirs", SPE Journal (septembre 1963), 245-255. Cette technique permet d'interpréter le comportement double porosité (ou double milieu) d'un réservoir fissuré à partir d'un test de puits en écoulement monophasique. Selon cette approche, tout volume élémentaire (maille) du réservoir fissuré est modélisé sous la forme d'un ensemble de blocs parallélépipédiques identiques, appelés blocs équivalents. Ces blocs sont limités par un système orthogonal de fractures uniformes continues orientées suivant les directions principales d'écoulement. L'écoulement des fluides, à l'échelle du réservoir, s'effectue à travers les fractures seulement, et des échanges de fluides interviennent localement entre les fractures et les blocs matriciels.

Il est cependant nécessaire de calculer les dimensions de ces blocs parallélépipédiques équivalents. On connaît par le brevet FR 2.757.957 (US 6.064.944) une méthode pour déterminer ces dimensions de blocs équivalents. Cette méthode permet de définir un seul bloc équivalent de section rectangulaire pour chacune des couches du gisement. Or, la réalité géologique est souvent complexe à tel point que la représentation des fractures au moyen d'un seul bloc équivalent se révèle souvent trop approximative pour estimer avec suffisamment de précision les échanges matrice/ fracture.

**La méthode selon l'invention**

Ainsi, l'objet de l'invention concerne une méthode alternative pour optimiser l'exploitation d'un gisement de fluide traversé par un réseau de fractures, à partir d'une modélisation dudit gisement selon un milieu poreux comportant un ensemble de blocs de formes et de tailles irrégulières délimités par des fractures. Au cours de cette méthode, on détermine une représentation simplifiée dudit milieu en un ensemble de blocs équivalents de formes et de tailles régulières ladite, représentation simplifiée conduisant sensiblement à la même récupération de fluide lors d'un processus d'imbibition capillaire que ledit milieu poreux. La méthode selon la revendication 1, comporte les étapes suivantes :

- on détermine une première courbe représentant la dérivée ($A'(X)$) d'une fonction ($A(X)$) définissant une avancée d'un front d'imbibition au sein desdits blocs constitutifs du milieu poreux, par rapport à une distance d'avancée ($X$) dudit front ;

- on détermine une seconde courbe représentant la dérivée ($A'eq(X)$), par rapport à la distance d'avancée ($X$), d'une fonction ($Aeq(X)$) définissant une avancée d'un front d'imbibition au sein desdits blocs équivalents constitutifs de ladite représentation simplifiée, ladite seconde courbe étant constituée d'au moins deux segments de droite de pentes distinctes et fonctions des dimensions desdits blocs équivalents ;

- on obtient les dimensions desdits blocs équivalents, en ajustant ladite seconde courbe ($A'eq(X)$) sur ladite première courbe ($A'(X)$) ; et

- on optimise l'exploitation du gisement en simulant des écoulements de fluides dans ledit gisement, au moyen d'un simulateur de réservoir à double milieu utilisant lesdites dimensions des familles de blocs équivalents.

Selon un mode de réalisation, on identifie seulement deux familles de blocs équivalents parallélépipédiques. Les dimensions de ces blocs comprenant les dimensions a1 et b1 de la base des blocs d'une première famille, les dimensions a2 et b2 de la base des blocs d'une seconde famille, ainsi que des proportions en surface des blocs de ces deux familles. On peut alors déterminer ces dimensions de blocs équivalents au moyen des étapes suivantes :

- on évalue a1 en minimisant une somme d'écarts quadratiques moyens entre lesdites courbes dérivées ;

- on calcule une différence d'ordonnée entre les deux segments de droite pour une abscisse égale à a1/2 ;

- on détermine les pentes des deux segments de droite définis sur des intervalles respectifs [0 ; a1/2 et [a1/2 ; a2/2], ainsi que l'ordonnée à l'origine de l'un des segments ; et

- on déduit les dimensions b1, a2 et b2 ainsi que les proportions en surface, à partir de ladite différence d'ordonnée, desdites pentes, et de ladite ordonnée à l'origine.

D'autres caractéristiques et avantages de la méthode selon l'invention, apparaîtront à la lecture de la description ci-après d'exemples non limitatifs de réalisations, en se référant aux figures annexées et décrites ci-après.

**Présentation succincte des figures**

- la figure 1 illustre le principe de la méthode de détermination de deux familles de blocs équivalents.

- la figure 2 est un exemple d'image représentant un réseau de fractures réaliste constitué de deux familles de fractures.

- la figure 3 compare, pour l'image de réseau de la figure 2, la fonction Aeq(X) relative à une famille de blocs équivalents avec la fonction A(X) réelle.

- la figure 4 compare, pour l'image de réseau de la figure 2, la fonction Aeq(X) relative à deux familles de blocs équivalents avec la fonction A(X) réelle.

## Description détaillée de la méthode

La méthode selon l'invention permet d'optimiser l'exploitation d'un gisement d'hydrocarbures, notamment lorsque celui-ci comporte un réseau de fractures. La méthode permet en particulier de modéliser le gisement sous la forme d'un milieu poreux simplifié appelé, « milieu équivalent ». On appelle « milieu équivalent » un milieu dont l'estimation de la récupération d'huile lors d'un processus de déplacement, tel que l'imbibition capillaire, est sensiblement la même que l'estimation de la récupération d'huile effectuée sur le milieu poreux complexe, i.e. représentatif des diverses formes et dimensions des blocs matriciels constituant le gisement considéré.

Plus précisément, on part d'un modèle géologique du gisement étudié, qui consiste en une représentation détaillée de sa réelle complexité interne. Ce modèle constitue un milieu poreux complexe composé d'un ensemble de blocs matriciels poreux, de formes et tailles irrégulières. Chacun des blocs est délimité par des fractures. On estime la récupération d'huile lors d'un processus d'imbibition capillaire à partir de ce milieu poreux complexe. Puis, on détermine la géométrie d'un milieu poreux simplifié possédant les mêmes propriétés pétrophysiques et se comportant de manière équivalente en terme de récupération d'huile. Ce milieu équivalent consiste en un ou plusieurs ensembles de blocs, appelés « blocs équivalents », identiques en dimensions et forme. Il peut s'agir par exemple de quelques familles de parallélépipèdes. La méthode comporte quatre étapes :

1- Discrétisation du gisement en un ensemble de mailles

2- Modélisation du réseau de fractures

3- Simulation des écoulements de fluides

4- Optimisation des conditions de production du gisement

### 1- Discrétisation du gisement en un ensemble de mailles

Depuis longtemps, l'industrie pétrolière allie les mesures sur champ (in situ) aux modélisations expérimentales (réalisées au laboratoire) et/ou numériques (réalisées au moyen de logiciels).

Les modélisations des gisements pétroliers, constituent donc une étape technique indispensable à toute exploration ou exploitation de gisement. Ces modélisations ont pour but de fournir une description du gisement caractérisé par la structure/géométrie et les propriétés pétrophysiques des dépôts ou formations géologiques qui le constituent.

Ces modélisations se basent sur une représentation du gisement, en un ensemble de mailles. Chacune de ces mailles représentent un volume donné du gisement, et constitue un volume élémentaire du gisement. L'ensemble des mailles constitue une représentation discrète du gisement.

### 2- Modélisation du réseau de fractures

Pour prendre en compte le rôle du réseau de fractures dans la simulation des écoulements au sein du gisement, il est nécessaire d'associer à chacun de ces volumes élémentaires (mailles) une modélisation des fractures.

Dans un premier temps, on part d'un modèle géologique du gisement étudié, qui consiste en une représentation détaillée de sa réelle complexité interne. Ce modèle constitue un milieu poreux complexe composé d'un ensemble de blocs matriciels poreux, de formes et tailles irrégulières, délimités par des fractures. Ce milieu poreux complexe constitue une image représentative du réseau réel de fractures.

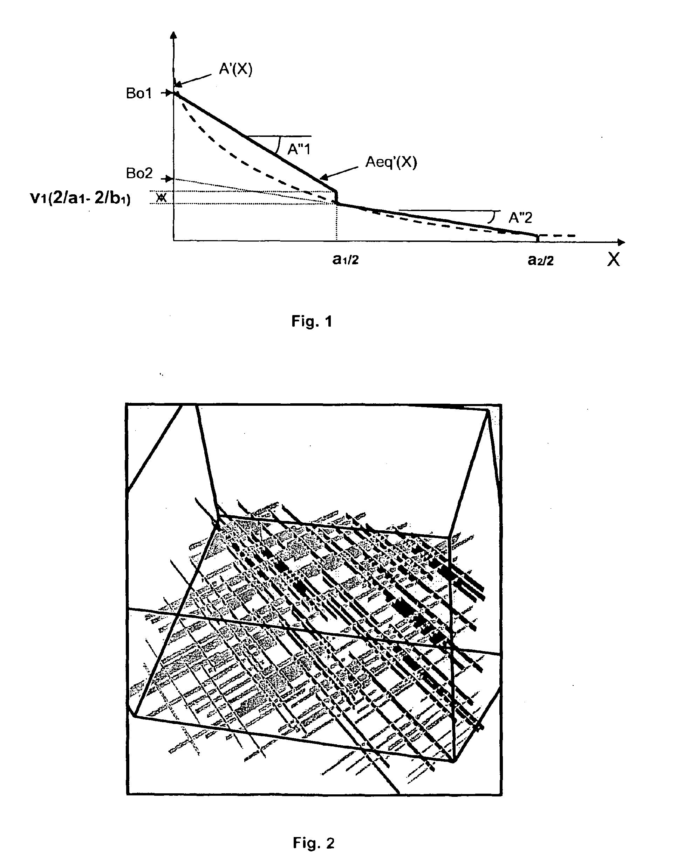

Une telle image peut être générée par des logiciels de modélisation, bien connus des spécialistes, tel que le logiciel FRACAFlow® (IFP, France). Une telle image est représentée figure 2.

Puis, on simplifie cette représentation complexe, par un milieu poreux simplifié, équivalent en terme de récupération d'huile.

Pour ce faire, on utilise l'approche « double porosité », que l'on associe à une méthode de détermination de N familles de blocs équivalents. La méthode consiste à déterminer les dimensions des sections des blocs équivalent dans le plan des couches géologiques, par identification d'une fonction représentant l'aire envahie des blocs, notée $A$, en fonction de la distance de pénétration, notée $X$, d'un front depuis la limite des blocs jusqu'à leur centre. Elle comporte les étapes suivantes :

- on détermine la courbe représentant l'aire de bloc envahie par un fluide déplaçant, en fonction de la distance de pénétration du front d'eau dans un bloc ;

- on détermine la dérivée de cette courbe par rapport à la distance de pénétration ;

- on détermine les dimensions de bloc d'au moins deux familles de blocs équivalents en ajustant, sur ladite courbe dérivée A'(X), une courbe dérivée équivalente A'eq(X).

## Détermination de A(X)

Lors de la production des hydrocarbures d'un gisement, un fluide déplaçant, tel que de l'eau, circule au sein du gisement. Selon la modélisation du gisement en un milieu poreux complexe comportant un ensemble de blocs, l'eau circule dans les fractures et pénètre au sein des blocs matriciels où sa progression peut en première approximation être assimilée à celle d'un front eau-huile. La distance séparant le bord d'un bloc et ce front est notée X. Considérant la section du bloc au sein de la ou de l'une des couches géologiques qui le contiennent, la surface envahie par ce fluide déplaçant divisée par l'aire totale de bloc à ce niveau est notée A, aire d'invasion normée. La relation reliant A et X est notée : A(X). Cette fonction définit physiquement l'avancée du front d'imbibition au sein des blocs constitutifs du milieu fissuré. L'aire A est une aire normée, i.e. rapportée à l'aire totale des sections des blocs contenus dans le volume élémentaire (cellule ou maille) du modèle de réservoir fracturé étudié.

Cette fonction $A(X)$, relative aux blocs du milieu poreux complexe, est calculée par une technique de traitement d'image, appliquée à l'image représentative du réseau réel de fractures (milieu poreux complexe) reconstruite à l'échelle des unités élémentaires (mailles) du modèle de gisement considéré.

Différentes méthodes, connues des spécialistes, permettent de déterminer la fonction A(X). On peut citer par la méthode décrite dans le brevet FR 2.757.957 (US 6.064.944) :

Les fissures étant définies par les coordonnées de leurs points limites sur une coupe bidimensionnelle XY d'une couche, le processus d'imbibition par lequel de l'eau est présente dans les fissures et de l'huile est présente dans les blocs matriciels doit être déterminé. On suppose que l'invasion de la matrice par de l'eau est du type à piston. On admet que la fonction X=f(t) qui relie l'avancée du front d'eau au temps est la même pour tous les blocs matriciels, quelle que soit leur forme, et pour tous les blocs élémentaires. La fonction A(X) n'a pas d'expression analytique. Elle est calculée à partir d'une discrétisation de la coupe XY de la couche étudiée suivant l'algorithme défini ci-après.

La coupe XY de la couche étudiée est considérée comme une image dont chaque pixel représente un élément de surface. Ces pixels sont espacés régulièrement d'un pas dx dans la direction X et dy dans la direction Y. L'algorithme mis en oeuvre vise à déterminer, pour chaque pixel de cette image, la distance minimale qui le sépare de la fissure la plus proche.

L'image est traduite par un tableau de nombres réels à deux dimensions : Pict[0 :nx+1,0 :ny+1] où nx et ny sont les nombres de pixels de l'image dans les directions X et Y. En pratique, le nombre total de pixels (nx.ny) est par exemple de l'ordre du million. Les valeurs des éléments du tableau Pict sont les distances recherchées.

**Initialisation :** Tous les pixels par lesquels passe une fissure sont à une distance nulle de la fissure la plus proche. Pour ces pixels, le tableau Pict est donc initialisé à la valeur 0. Ceci est fait par un algorithme connu en soi (l'algorithme de Bresline par exemple) auquel on donne les coordonnées des pixels correspondants aux deux extrémités d'une fissure considérée comme un segment de droite et qui initialise (à 0 dans le cas présent) les pixels les plus proches. Les autres éléments de Pict sont initialisés à une valeur supérieure à la plus grande distance existant entre deux pixels de l'image. Cette valeur est par exemple nx.dx+ny.dy.

**Calcul :** Pour un pixel donné, le calcul de la distance recherchée à la fissure la plus proche se fait à partir des valeurs de distance déjà calculées pour les pixels voisins. On lui affecte une valeur qui, si elle s'avère inférieure à la valeur qui lui a été assignée initialement, est le minimum des valeurs des pixels voisins auxquelles on ajoute la distance de ces pixels à celui considéré.

Ce calcul est réalisé en deux phases successives. Lors de la passe descendante, on parcourt l'image ligne par ligne, de haut en bas et de gauche à droite (de Pict [1,1] à Pict [nx,ny]). Les pixels dont on tient compte sont différents selon que l'on est dans une passe descendante ou une passe montante.

L'écart oblique dxy étant défini comme : $dxy = \sqrt{dx^2 + dy^2}$, l'algorithme s'écrit

```
pour j=1 à ny
| pour i=1 à nx
| | Pict[i,j] = min Pict[i-1,j] + dx, : passe descendante
```

```
| | Pict[i-1,j-1] + dxy,
| | Pict[i,j-1] + dy,
| | Pict[i+1,j-1 + dxy,
| | Pict[i,j]
| fin de boucle sur i
fin de boucle sur j
  pour j=ny à 1,
| pour i=1x à 1,
| | Pict[i,j] = minPict[i+1,j] + dx, : passe descendante
| | Pict[i+1,j+1] + dxy,
| | Pict[i,j+1] + dy,
| | Pict[i-1,j+1] + dxy,
| | Pict[i,j]
| fin de boucle sur i
fin de boucle sur j
```

**Histogramme :** A partir du tableau Pict ainsi calculé, on peut tracer un histogramme en classant les valeurs non nulles (celles affectées aux pixels hors des fissures) par ordre croissant.

Le cumulé de cet histogramme donne, pour toute distance délimitant deux intervalles de l'histogramme, le nombre de pixels non nuls dont la valeur est inférieure à cette distance. Dans l'application décrite à un milieu poreux fissuré où cette distance correspond à l'avancée du front d'eau, le cumulé de l'histogramme indique donc l'aire envahie par l'eau. La courbe A(X) est obtenue en divisant ce cumulé par le nombre total de pixels non nuls (pour la normer). Le nombre d'intervalles utilisés en abscisse pour l'histogramme correspond au nombre de points de discrétisation de la courbe A(X). On le choisit égal à 500 par exemple.

**Détermination des dimensions des blocs équivalents**

Selon l'invention, les blocs équivalents sont des parallélépipèdes de hauteur c (direction perpendiculaire aux couches géologiques), et de section rectangulaire de dimensions *a* et *b*. La dimension "verticale" (i.e. orthogonale aux couches) des blocs n'est pas requise dans la mesure où une continuité capillaire est supposée exister dans cette direction, les réseaux de fractures ayant le plus souvent un pendage sub-orthogonal aux limites de couches. Ainsi, la détermination des dimensions d'un bloc, consiste à déterminer la largeur (*a*) et la longueur (*b*) du rectangle formant la base du parallélépipède.

La méthode selon l'invention permet de déterminer les dimensions a et b d'un bloc équivalent, à partir d'une analyse de la dérivée, A'(X), de la fonction A(X).

D'abord appliquée au cas originel de la détermination d'un seul bloc équivalent, cette méthode de détermination est généralisée au cas de N familles de blocs équivalents. La figure 1 illustre le principe de la méthode de détermination de deux familles de blocs équivalents.

*Méthode analytique de détermination des dimensions d'une famille de bloc équivalent*

La fonction donnant l'aire normée du bloc de section rectangulaire équivalent, Aeq, en fonction de la distance à la fracture, X, s'écrit :

$$Aeq(X) = (2/a+2/b)X - 4X^2/(ab)$$

On détermine les dimensions a et b d'un bloc équivalent par identification de la courbe dérivée de A(X). En effet, d'une part, pour un bloc équivalent de dimensions a et b, la dérivée de l'aire envahie normée Aeq par rapport à la distance à la fracture X est une droite d'équation :

$$A'eq(X) = (2/a+2/b) - 8X/(ab)$$

D'autre part, pour les blocs du milieu poreux complexe, la dérivée A'(X) de l'aire envahie normée par rapport à X, présente des propriétés intéressantes et utiles pour l'identification:

- valeur à l'origine A'(0) : dans une situation bidimensionnelle, cette pente est égale au double de la longueur totale des fractures par unité d'aire de milieu fracturé à homogénéiser (car chaque fracture est commune à deux blocs et échange avec chacun d'eux). Elle peut être identifiée à la dérivée initiale relative au bloc équivalent qui s'écrit :

$$A'eq(0) = 2/a + 2/b = 2(a+b)/(ab)$$

- valeur finale A'(Xmax) : celle-ci renseigne sur l'anisotropie de forme des blocs sachant qu'elle tend vers zéro lorsque X tend vers Xmax, pour des blocs de dimensions voisines dans chaque direction, mais tend vers la plus grande dimension des blocs, si ces derniers ont une section rectangulaire. Pour les blocs du milieu poreux complexe, de tailles variées, la dérivée finale A'(Xmax) caractérise la forme des derniers plus grands blocs. Pour le bloc équivalent, cette pente finale, obtenue pour une valeur Xmax de la distance X égale à [Min(a,b)]/2, s'écrit :

$$A'eq(Xmax) = (2/a+2/b) - 4[Min(a,b)]/(ab)$$

En supposant que Min(a,b)=a, on obtient:

$$A'eq(a/2) = 2/a - 2/b$$

La méthode d'identification des dimensions du bloc équivalent consiste alors à identifier la valeur à l'origine et la pente de la fonction dérivée A'eq(X) respectivement à l'origine A'(0), et à la pente moyenne estimée de la fonction réelle A'(X).

*Origine de la courbe A '(X)*

La dérivée origine, A'(0), est, par définition, égale au double de la longueur totale de fractures par unité d'aire à homogénéiser, c'est-à-dire, au double de la densité surfacique de fracture $(m/m^2)$, information disponible à l'issue de l'analyse de la fracturation. On peut aussi estimer une valeur numérique de A'(0) en discrétisant la fonction A'(X), ce qui donne par exemple :

$$A'(0) = 0.1/A^{-1}(0.1)$$

(A, aire normalisée varie entre 0 et 1 et A(0)=0)

*Pente moyenne de la courbe A '(X)*

Cette pente moyenne, A'moy, est estimée par minimisation des écarts entre la droite approchée recherchée et la fonction réelle A'(X).

*Détermination des dimensions (a,b) du bloc équivalent,*

Les origine et pente de la droite A'eq(X) relative au bloc rectangulaire (a,b) recherché sont identifiées aux deux valeurs réelles précédentes, ce qui conduit au système d'équations suivantes :

$$A'(0) = 2/a + 2/b \quad soit \quad (1/a) + (1/b) = A'(0)/2$$

et

$$A'moy = -8/(ab) \quad \text{soit} \quad (1/b) \times (1/b) = -A'moy/8$$

1/a et 1/b sont donc solutions de l'équation : $y^2 - [A'(0)/2]\, y - A'moy/8 = 0$
qui a pour solutions :

$$1/a = [A'(0)/4] + [sqrt([A'(0)/2]^2 + A'moy/2)]/2$$

$$1/b = [A'(0)/4] - [sqrt([A'(0)/2]^2 + A'moy/2)]/2$$

### *Méthode analytique de détermination des dimensions de n familles de bloc équivalent*

La réalité géologique est souvent complexe, à tel point que la représentation du réseau de fractures au moyen d'une seule famille de bloc équivalent, se révèle souvent trop approximative pour estimer avec suffisamment de précision les échanges matrice/fractures. On appelle famille de blocs équivalents, un ensemble de blocs équivalents ayant des sections de mêmes dimensions a et b.
Ainsi, selon un autre mode de réalisation, on détermine $n$ ($n>1$) familles de blocs équivalents et non plus une seule.
On repart ainsi du milieu poreux complexe, comportant un ensemble de blocs de dimensions et formes variées, qu'on cherche cette fois à modéliser comme l'ensemble de $n$ (et non une) familles $j$ de $nj$ blocs parallélépipédiques, dont les dimensions de la base rectangulaire sont $aj$ et $bj$.
Exprimons l'aire Aeq(X) et la dérivée A'eq(X) relatives à l'ensemble de ces familles. On suppose à nouveau $aj<bj$ et on classe les familles $(nj,aj,bj)$ de telle façon que $a1 <a2<...<an$

$$Aeq(X) = \frac{\sum_{j,aj<=2X} njajbj + \sum_{j,aj>2X}^{n} nj[ajbj - (aj - 2X)(bj - 2X)]}{\sum_{j=1}^{n} njajbj}$$

$$Aeq(X) = \frac{\sum_{j,aj<=2X} njajbj + \sum_{j,aj>2X}^{n} (njajbj)[2X/aj + 2X/bj - 4X^2/(ajbj)]}{\sum_{j=1}^{n} njajbj}$$

$$Aeq(X) = \sum_{j,aj<=2X} vj + \sum_{j,aj>2X}^{n} vj[2X/aj + 2X/bj - 4X^2/(ajbj)]$$

avec vj= fraction surfacique de la famille (nj,aj,bj) de nj blocs de dimensions aj et bj.

$$A'eq(X) = \sum_{j,aj>2X}^{n} vj[2/aj + 2/bj - 8X/(ajbj)]$$

$$A'eq(X) = \sum_{j,aj>2X}^{n} vj[2/aj + 2/bj] - 8[\sum_{j,aj>2X}^{n} vj/(ajbj)]X$$

A'eq(X) demeure une fonction linéaire en X, mais par segments j de pente, A"j, décroissante dont l'extrémité X=aj/2 correspond à l'achèvement de l'invasion d'une famille de blocs donnée j. Si de plus, aj est strictement inférieur à bj, une discontinuité de cette dérivée, égale à vj(2/aj - 2/bj), est observée pour X=aj/2.

La pente de chaque segment de droite j correspondant à l'invasion des (n-j+1) familles de plus grands blocs vaut :

$$A"j = -8[\sum_{i=j}^{i=n} vi/(aibi)]$$

On note en particulier que :

$$A'eq(0) = \sum_{j=1}^{n} vj[2/aj + 2/bj]$$

$$A'eq(Xmax=an/2) = vn[2/an - 2/bn]$$

Au moyen d'une régression linéaire par morceaux de la dérivée réelle A'(X), on identifie *n* familles de bloc équivalent, chaque famille de bloc équivalent j étant représentée par un segment [aj-1,aj] de pente A"j donnée.

Les dimensions minimales aj des divers blocs équivalents étant connues, la détermination de ces *n* familles de bloc est poursuivie en résolvant le système suivant, à (2n) inconnues vi et bi:

$$-8[\sum_{i=j}^{n} vi/(aibi)] = A"j, \qquad j=1 \text{ à } n$$

$$vj[2/aj - 2/bj] = \delta A'j, \qquad j=1 \text{ à } n$$

- A"j étant la pente de la courbe A'(X) approchée par un segment de droite sur l'intervalle [aj-1, aj]

- δA'j étant le saut de la dérivée en X=ai/2 (discontinuité de A'(X) assimilée à n segments de droite).

**_Méthode analytique de détermination des dimensions de 2 familles de bloc équivalent_**

Selon un mode particulier de réalisation de la méthode décrite plus haut, on identifie seulement deux (*n*=2) familles de blocs équivalents, de dimensions (a1, b1) et (a2, b2), en proportions surfaciques v1 et (1-v1), compte tenu du fait que ce choix de deux familles de blocs équivalents constitue un bon compromis pratique pour la représentation des fractures. On peut en effet montrer que deux familles de blocs équivalents approchent beaucoup mieux les processus d'invasion des blocs par un fluide qu'un seul ensemble de blocs équivalents. Ce cas particulier *n*=2 semble constituer un progrès suffisant en pratique.

La figure 1 illustre le principe de la méthode de détermination de deux familles de blocs équivalents. Elle représente la dérivée réelle A'(X) en fonction de la distance X, en courbe pointillée, ainsi que la dérivée équivalente Aeq'(X), en courbe continue, constituée de deux segments de droite.

L'identification de deux familles de blocs *(v1,a1,b1) et (v2,a2,b2)* consiste à ajuster sur la courbe dérivée réelle A'(X) une courbe dérivée A'eq(X) comportant deux segments de droite de pente distincte, continus si les petits blocs sont sensiblement de section carrée (a1#b1), discontinus s'ils sont au contraire rectangulaires (figure 1). En supposant toujours que a1<a2, a1<b1 et a2<b2, la méthode décrite ci-après comporte deux étapes d'identification.

_Détermination de al_

On recherche la valeur de la dimension a1 qui minimise la somme des écarts quadratiques moyens entre deux segments de droite définis sur les intervalles [0,a1/2] et [a1 /2,Xmax] et la courbe dérivée réelle A'(X) (NB : ces deux segments de droite ne sont pas forcément continus) ;

- si la valeur de a1 est telle que A(Xmax)-A(al/2) ou *A*(a1/2) est négligeable devant A(Xmax)=1 (inférieur à 0.1 ou 0.05 par exemple), alors la prise en considération de deux familles de blocs s'avère peu utile et la détermination d'un seul bloc équivalent suffit ;

- si ce n'est pas le cas, on poursuit l'identification des deux familles de blocs équivalents (a1,b1) et (a2,b2).

_Détermination des valeurs de v1,b1,a2 et b2._

Exprimons la formule de A'eq(X) dans le cas particulier de deux familles de blocs. Il s'agit de deux segments de droite présentant une éventuelle discontinuité en X=a1/2 :

$$A'eq(X) = [v1(2/a1+2/b1) + v2(2/a2+2/b2)] - 8[v1/(a1b1) + v2/(a2b2)]X \quad \text{si}$$

$$0<X<a1/2$$

$$A'eq(X) = [v2(2/a2+2/b2)] - 8[v2/(a2b2)]X \quad \text{si}$$

$$a1/2<X<a2/2$$

L'étape de régression linéaire décrite précédemment permet de déterminer les pentes (A"1, A"2) et ordonnées à l'origine (Bol, Bo2) des deux segments de droite définis sur les intervalles respectifs [0 ; a1/2] et [a1/2 ; a2/2] :

$$A"1 = -8[v1/(a1b1) + v2/(a2b2)]$$

$$A"2 = -8[v2/(a2b2)]$$

$$Bol = [v1(2/a1+2/b1) + v2(2/a2+2/b2)]$$

$$Bo2 = [v2(2/a2+2/b2)]$$

Par soustraction des pentes des deux segments de droite, on obtient l'équation suivante :

$$A''1 - A''2 = -8v1/(a1b1) \qquad (1)$$

D'autre part, en X=a1/2, la différence d'ordonnée, δA'1, entre les deux segments de droite vaut :

$$\delta A'1 = v1(2/a1 - 2/b1) \qquad (2)$$

De l'équation (1), on déduit que :

$$-v1/b1 = a1 (A''1 - A''2)/8$$

et en remplaçant l'expression de v1/b1 dans l'équation (2), on déduit la valeur de v1 :

$$2v1/a1 = \delta A'1 + 2 v1/b1$$

soit encore :

$$2v1/a1 = \delta A'1 + a1 (A''2 - A''1)/4$$

d'où:

$$v1 = a1 [\delta A'1 + a1 (A''2 - A''1)/4 ]/2$$

On déduit ensuite b1 :

$$b1 = 8v1 / [a1 (A''2 - A''1)]$$

et

$$v2 \qquad = \qquad 1 - v1$$

(1/a2) et (1/b2) peuvent ensuite être déterminés comme les solutions du polynôme de 2° degré formé à partir des expressions de la pente (A''2) et de l'ordonnée à l'origine (Bo2) du 2° segment de droite ajusté. En effet :

$$(1/a2) \cdot (1/b2) \qquad = \qquad - A''2 / (8v2)$$

$$1/a2 + 1/b2 \qquad = \qquad Bo2 / (2v2)$$

ce qui conduit au polynôme suivant, dont 1/a2 et 1/b2 sont les solutions :

$$y^2 - [Bo2 / (2v2)] \, y \; - A''2 / (8v2) = 0$$

## 3- Simulation des écoulements de fluides

A ce stade, l'ingénieur réservoir dispose d'une représentation simplifiée du gisement d'hydrocarbures fracturé, dont il souhaite extraire les hydrocarbures. Cette représentation est équivalente à une représentation complexe en terme d'estimation de récupération.

L'ingénieur réservoir choisit alors un procédé de production, par exemple le procédé de récupération par injection d'eau, dont il demeure ensuite à préciser le scénario optimal de mise en oeuvre pour le champ considéré. La définition d'un scénario optimal d'injection d'eau consistera, par exemple, à fixer le nombre et l'implantation (position et espacement) des puits injecteurs et producteurs afin de tenir compte au mieux de l'impact des fractures sur la progression des fluides au sein du réservoir.

En fonction du scénario choisi, et de la représentation du gisement par blocs équivalents, on est alors capable de simuler la production d'hydrocarbures escomptée, au moyen d'un outil bien connu des spécialistes : un simulateur d'écoulement dit à double milieu. En exportant les dimensions des familles de blocs équivalents vers un tel simulateur d'écoulement, on simule les écoulements de fluides au sein de gisement.

## 4- Optimisation des conditions de production du gisement

En sélectionnant divers scénarios caractérisés par exemple par diverses implantations respectives des puits injecteurs et producteurs, et en simulant la production d'hydrocarbures pour chacun d'eux selon l'étape 3, on peut sélectionner le scénario permettant d'optimiser la production du gisement suivant les critères technico-économiques sélectionnés.

**Exemple d'application.**

On considère le réseau de fractures réaliste de la figure 2, constitué de deux familles possédant les propriétés statistiques suivantes :

- famille 1 : fractures de longueur moyenne égale à 60 m, d'espacement moyen égal à 5 m;

- famille 2 : fractures de longueur moyenne égale à 60 m, d'espacement moyen égal à 7 m, orientées à 90° par rapport aux fractures de la famille 1.

La méthode d'identification d'une puis deux familles de blocs équivalents fondée sur l'usage de la dérivée de la fonction A(X) est appliquée à une section horizontale représentative du réseau réaliste étudié. Les résultats obtenus sont les suivants :

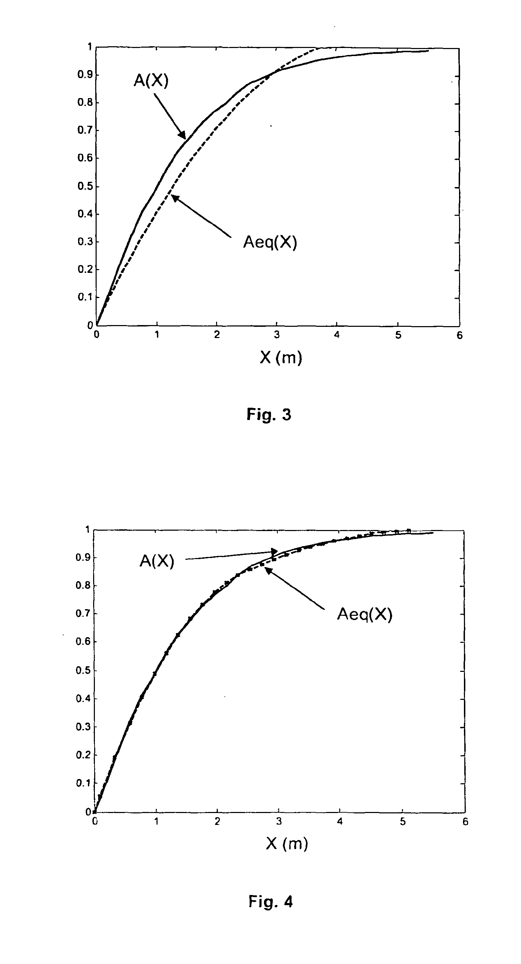

- identification d'un bloc : les dimensions de ce bloc équivalent sont a = 7,52 m et b = 10,65 m et la figure 3 compare la fonction Aeq(X) relative à cette famille de blocs équivalents (courbe pointillée), avec la fonction A(X) réelle (courbe continue).

- identification de deux familles de blocs équivalents : un premier ensemble de blocs équivalents de dimensions a1 = 4,72 m et b1 = 4,92 m, représentant 49 % de l'aire totale des blocs, et un second ensemble de blocs de dimensions a2 = 10,55 m et b2 = 11,25 m occupant l'aire complémentaire. La figure 4 compare la fonction Aeq(X) relative à ces deux familles de blocs équivalents (courbe pointillée), avec la fonction A(X) réelle (courbe continue).

La comparaison des deux figures précédentes illustre de manière évidente que deux familles de blocs équivalents reproduisent beaucoup mieux la distribution réelle des fractures qu'une seule. De plus, on constate que l'erreur résiduelle est alors tout à fait négligeable. En conséquence, l'identification de plus de deux familles de blocs équivalents n'apparaît pas nécessaire.

## Avantages

L'invention permet de prévoir le comportement hydrodynamique (débit, pression,..) en réponse à des sollicitations extérieures imposées via des puits lors de la production d'hydrocarbures.

Les ingénieurs en charge de l'exploitation du gisement ont alors un outil leur permettant de rapidement évaluer la performance de différents scénarios de production, et ainsi, de sélectionner celui qui optimise l'exploitation au regard des critères sélectionnés par l'opérateur, comme d'assurer une production d'hydrocarbure optimale.

Ainsi, l'invention trouve une application industrielle dans l'exploitation de gisements souterrains, comportant un réseau de fractures. Il peut s'agir d'un gisement d'hydrocarbures pour lequel on souhaite optimiser la production, ou un gisement de stockage de gaz par exemple, pour lequel on souhaite optimiser l'injection ou les conditions de stockage.

## Revendications

1. Méthode pour optimiser l'exploitation d'un gisement de fluide traversé par un réseau de fractures, à partir d'une modélisation dudit gisement selon un milieu poreux comportant un ensemble de blocs de formes et de tailles irrégulières délimités par des fractures, dans laquelle on détermine une représentation simplifiée dudit milieu en un ensemble de blocs équivalents de formes et de tailles régulières, ladite représentation simplifiée conduisant sensiblement à la même récupération de fluide lors d'un processus d'imbibition capillaire que ledit milieu poreux, **caractérisée en ce que** la méthode comporte les étapes suivantes :

   - on détermine une première courbe représentant la dérivée ($A'(X)$) d'une fonction ($A(X)$) définissant une avancée d'un front d'imbibition au sein desdits blocs constitutifs du milieu poreux, par rapport à une distance d'avancée ($X$) dudit front ;
   - on détermine une seconde courbe représentant la dérivée ($A'eq(X)$), par rapport à la distance d'avancée ($X$), d'une fonction ($Aeq(X)$) définissant une avancée d'un front d'imbibition au sein desdits blocs équivalents constitutifs de ladite représentation simplifiée, ladite seconde courbe étant constitué d'au moins deux segments de droite de pentes distinctes et fonctions des dimensions desdits blocs équivalents ;
   - on obtient les dimensions desdits blocs équivalents, en ajustant ladite seconde courbe ($A'eq(X)$) sur ladite première courbe ($A'(X)$) ; et
   - on optimise l'exploitation du gisement en simulant des écoulements de fluides dans ledit gisement, au moyen d'un simulateur de réservoir à double milieu utilisant lesdites dimensions des familles de blocs équivalents.

2. Méthode selon la revendication 1, dans laquelle on identifie deux familles de blocs équivalents parallélépipédiques, lesdites dimensions comprenant les dimensions a1 et b1 de la base des blocs d'une première famille, les dimensions a2 et b2 de la base des blocs d'une seconde famille, ainsi que des proportions en surface des blocs de ces deux familles, et on détermine lesdites dimensions des blocs équivalents des deux familles au moyen des étapes suivantes :

   - on évalue a1 en minimisant une somme d'écarts quadratiques moyens entre lesdites courbes dérivées ;
   - on calcule une différence d'ordonnée entre les deux segments de droite pour une abscisse égale à a1/2 ;
   - on détermine les pentes des deux segments de droite définis sur des intervalles respectifs [0 ; a1/2] et [al/2 ;

a2/2], ainsi que l'ordonnée à l'origine de l'un des segments ; et
- on déduit les dimensions b1, a2 et b2 ainsi que les proportions en surface, à partir de ladite différence d'ordonnée, desdites pentes, et de ladite ordonnée à l'origine.

**Claims**

1. A method for optimizing the development of a fluid reservoir traversed by a network of fractures, from modelling of said reservoir as a porous medium comprising a set of blocks of irregular shapes and sizes delimited by fractures, wherein a simplified representation of said medium is determined in form of a set of equivalent blocks of regular shapes and sizes, said simplified representation substantially leading to the same fluid recovery during a capillary imbibition process as said porous medium, **characterized in that** the method comprises the following stages:

   - determining a first curve representing derivative (A'(X)) of a function (A(X)) defining a progress of an imbibition front within said constituent blocks of the porous medium, with respect to a distance of progress (X) of said front,
   - determining a second curve representing derivative (A'eq(X)), with respect to distance of progress (X), of a function (Aeq(X)) defining a progress of an imbibition front within said constituent equivalent blocks of said simplified representation, said second curve consisting of at least two line segments with distinct slopes and depending on the dimensions of said equivalent blocks,
   - obtaining the dimensions of said equivalent blocks by adjusting said second curve (A'eq(X)) to said first curve (A'(X)), and
   - optimizing the development of the reservoir by simulating fluid flows in said reservoir, by means of a double-medium reservoir simulator using said dimensions of the families of equivalent blocks.

2. A method as claimed in claim 1, wherein two families of parallelepipedic equivalent blocks are identified, said dimensions comprising dimensions a1 and b1 of the base of the blocks of a first family, dimensions a2 and b2 of the base of the blocks of a second family, as well as surface proportions of the blocks of these two families, and said dimensions of the equivalent blocks of the two families are determined by means of the following stages:

   - evaluating a1 by minimizing a sum of mean square deviations between said derived curves,
   - calculating an ordinate difference between the two line segments for an abscissa equal to a1/2,
   - determining the slopes of the two line segments defined in respective intervals (0 ; a1/2) and (a1/2 ; a2/2), as well as the ordinate at origin of one of the segments, and
   - deducing dimensions b1, a2 and b2, as well as the surface proportions, from said ordinate difference, said slopes and said ordinate at origin.

**Patentansprüche**

1. Verfahren zur Optimierung der Ausbeutung einer Fluidlagerstätte, die von einem Netz von Brüchen durchquert wird, ausgehend von einer Modellierung dieser Lagerstätte einem porösen Medium entsprechend, das einen Satz Blöcke mit unregelmäßigen Formen und Größen umfasst, die von den Brüchen begrenzt werden, wobei eine vereinfachte Darstellung dieses Mediums als ein Satz äquivalenter Blöcke mit unregelmäßigen Formen und Größen bestimmt wird, wobei diese vereinfachte Darstellung bei einem kapillaren Tränkungsprozess im Wesentlichen zur gleichen Fluidrückgewinnung führt wie dieses poröse Medium, **dadurch gekennzeichnet, dass** das Verfahren die folgenden Schritte umfasst:

   - das Bestimmen einer ersten Kurve, die die Ableitung (A'(X)) einer Funktion (A(X)) darstellt, die einen Fortschritt einer Tränkungsfront innerhalb der Blockbestandteile des porösen Mediums in Bezug auf eine Fortschrittsentfernung (X) dieser Front definiert;
   - das Bestimmen einer zweiten Kurve, die die Ableitung (A'eq(X)), in Bezug auf die Fortschrittsentfernung (X), einer Funktion (Aeq(X)) darstellt, die einen Fortschritt einer Tränkungsfront innerhalb der äquivalenten Blockbestandteile der vereinfachten Darstellung definiert, wobei diese zweite Kurve aus mindestens zwei Geradenabschnitten mit verschiedenen Steigungen und Dimensionsfunktionen der äquivalenten Blöcke besteht;
   - das Erhalten der Dimensionen der äquivalenten Blöcke durch Anpassen dieser zweiten Kurve (A'eq(X)) an die erste Kurve (A'(X)), und
   - das Optimieren der Lagerstätte durch Simulieren der Fluidströmungen in dieser Lagerstätte mithilfe einer Lagerstättensimulation mit zweifachem Medium, das diese Dimensionen der äquivalenten Blockfamilien verwendet.

2. Verfahren nach Anspruch 1, wobei zwei äquivalente parallelepipedische Blockfamilien identifiziert werden, wobei die Dimensionen die Dimensionen a1 und b1 der Grundfläche einer ersten Familie, die Dimensionen a2 und b2 der Grundfläche einer zweiten Familie sowie Flächenverhältnisse der Blöcke dieser zwei Familien umfassen, und die Dimensionen der äquivalenten Blöcke beider Familien anhand der folgenden Schritte bestimmt werden:

- das Bewerten von a1 durch Minimieren einer mittleren quadratischen Abweichung zwischen den abgeleiteten Kurven;
- das Berechnen einer Ordinatendifferenz zwischen den zwei Geradensegmenten für eine Abszisse gleich a1/2;
- das Bestimmen der Steigungen der zwei Geradensegmente, die auf jeweiligen Intervallen [0; a1/2] und [a1/2; a2/2] definiert werden, sowie der Ursprungsordinate eines der Segmente; und
- das Ableiten der Dimensionen b1, a2 und b2 sowie der Flächenverhältnisse aus dieser Ordinatendifferenz, diesen Steigungen und dieser Ursprungsordinate.

Fig. 1

Fig. 2

**Fig. 3**

**Fig. 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2757957

- US 6064944 A

**Littérature non-brevet citée dans la description**

- **Warren J.E. et al.** The Behavior of Naturally Fractured Reservoirs. *SPE Journal,* Septembre 1963, 245-255